# EUROPÄISCHE PATENTSCHRIFT

(11) **EP 3 763 431 B1**
(45) Veröffentlichungstag und Bekanntmachung des Hinweises auf die Patenterteilung: **01.09.2021**
(21) Anmeldenummer: 19186004.8
(22) Anmeldetag: 12.07.2019
(51) Int. Cl.: B01D 46/00, B01D 46/24

(54) **FILTERGERÄT**
FILTERING DEVICE
APPAREIL FILTRANT

(43) Veröffentlichungstag der Anmeldung: 13.01.2021
(73) Patentinhaber: TBH GmbH, 75334 Straubenhardt (DE)
(72) Erfinder: Mrochen, Enrico, 76137 Karlsruhe (DE); Farr, Fabian, 75196 Remchingen (DE)
(74) Vertreter: Durm Patentanwälte PartG mbB

(56) Entgegenhaltungen:
- DE-A1- 2 600 338
- DE-A1- 4 216 343
- JP-A- 2000 246 032
- US-A1- 2007 221 585

## Beschreibung

Die vorliegende Erfindung betrifft ein Filtergerät zum Entfernen von Schadstoffpartikeln aus der Luft.

Bei vielen Arbeitsprozessen in der Industrie werden Staub, Rauch oder andere kleine oder kleinste Partikel freigesetzt, vor denen sowohl die Mitarbeiter, die in einer solchen Umgebung arbeiten, als auch der Arbeitsprozess zu schützen sind.

Neben großen stationären Filteranlagen gibt es kleinere mobile Filter- und Absauggeräte, die bei Bedarf in der Nähe der Schadstoffquelle aufgestellt werden können. Die eingebauten Filter können nur eine bestimmte Menge von Schadstoffpartikeln aufnehmen, bevor sie entweder gereinigt oder ausgetauscht werden müssen.

Bekannt sind Absauggeräte mit auswechselbaren Filterkassetten, sodass ein beladenes Filter schnell und einfach gegen ein neues Filter ausgetauscht werden kann. Dabei ist darauf zu achten, dass die adsorbierten Schadstoffpartikel nicht wieder unkontrolliert freigesetzt werden.

EP 1 930 091 B1 desselben Anmelders beschreibt ein Absauggerät zum Absaugen von Schadstoffpartikeln aus der Luft mit einem Sauggebläse, einem Saugrohr und einer auswechselbaren Filterkassette, wobei das Saugrohr an den Lufteinlass der Filterkassette ankoppelbar ist. Zum Wechseln der Filterkassette muss das Saugrohr abgekoppelt werden. Um zu verhindern, dass Schadstoffpartikel aus der beladenen Filterkassette durch den offenen Lufteinlass wieder zurück in die Umgebung gelangen, ist ein flexibler auseinanderziehbarer Schutzschlauch mit seinem einen Ende mit der Filterkassette so verbunden, dass er den Lufteinlass umgibt. Mit seinem anderen Ende ist der Schutzschlauch auf das Saugrohr aufgeschoben. Wird das Saugrohr aus dem Anschlussstutzen herausgezogen, entfaltet sich der Schutzschlauch und bildet auf diese Weise eine Hülle um die - nun offene - Anschlussstelle zwischen Saugrohr und Anschlussstutzen. Der auseinandergezogene Schutzschlauch kann dann oberhalb des Anschlussstutzens abgebunden und schließlich getrennt werden. Der Schutzschlauch dient hier zum temporären Verschließen der Lufteinlassöffnung.

Weitere Vorrichtungen sind in der DE2600338 und JP2000246032 offenbart.

Die vorliegende Erfindung betrifft nun speziell ein Filtergerät mit einem Filtergehäuse, das einen Lufteinlass und eine Auslassöffnung für gefilterte Luft hat, mit einer auswechselbaren Filterpatrone umfassend einen hohlen Filterkörper, der an seinem einen Ende geschlossen ist und an seinem anderen Ende einen Filterring trägt, sowie mit einem Sauggebläse, das kontaminierte Luft durch den Lufteinlass und anschließend durch den Filterkörper saugt und am Ende die so gefilterte Luft wieder in die Umgebung bläst. In an sich bekannter Weise trägt der Filterkörper an seinem dem geschlossenen Ende gegenüberliegenden Ende einen Filterhaltering und sitzt in der Auslassöffnung des Filtergehäuses ein korrespondierender Anschlussring. Zur Montage der Filterpatrone wird der Filterhaltering auf den Anschlussring aufgesetzt, sodass der Filterkörper in den Innenraum des Filtergehäuses ragt. Zum Wechseln der Filterpatrone wird der Filterring einfach wieder von dem Anschlussring abgenommen, sodass der Filterkörper durch die Auslassöffnung aus dem Filtergehäuse herausgezogen werden kann.

Beim Auswechseln der Filterpatrone und Herausziehen des beladenen Filterkörpers aus dem Filtergehäuse besteht die Gefahr, dass die auf der Außenseite des Filterkörpers angelagerten Schadstoffpartikel wieder freigesetzt werden. Dies auf einfache und wirksame Weise zu verhindern, ist Aufgabe der Erfindung.

Gelöst wird die Aufgabe bei einem Filtergerät gemäß dem Oberbegriff des ersten Patentanspruchs dadurch, dass auf der Außenseite des Filterkörpers ein Folienring koaxial angeordnet ist, welcher in axialer Richtung verschieblich ist. Dieser Folienring enthält einen zusammengefalteten und in axialer Richtung auseinanderziehbaren Folienschlauch. Das eine Ende des Folienschlauchs ist an dem Folienring und das andere Ende an dem Filterhaltering befestigt. Erfindungsgemäß ist der Folienring an dem Anschlussring des Filtergehäuses fixierbar.

Wird der Filterkörper aus dem Filtergehäuse herausgezogen, entfernt sich der Filterhaltering von dem am Anschlussring des Filtergehäuses fixierten Filterrings, wodurch sich der Folienschlauch entfaltet, also axial auseinanderzieht. Erfindungsgemäß ist der vollständig auseinandergezogene Folienschlauch länger als der zylindrische Filterkörper, sodass der Folienschlauch den Filterkörper vollständig umhüllt, wenn der Filterkörper ganz herausgezogen ist.

Der auseinandergezogene Folienschlauch ist auch bei ganz herausgezogenem Filterkörper zunächst noch mit dem Folienring verbunden. Um nun die Filterpatrone entfernen zu können, kann der gestreckte Folienschlauch im Bereich zwischen dem unteren geschlossenen Ende des Filterkörpers und dem am Anschlussring fixierten Filterring abgebunden werden, sodass die Hülle um den Filterkörper auch am unteren Ende partikeldicht verschlossen wird. Zum Schluss kann der Filterring zusammen mit dem abgetrennten Rest des Folienschlauchs von dem Anschlussring des Filtergehäuses gelöst und entweder ebenfalls durch die Auslassöffnung des Filtergehäuses entnommen werden oder alternativ auch einfach im Innenraum des Filtergehäuses zurückbleiben. Die automatische Umhüllung des beladenen Filterkörpers bei der Entnahme aus dem Filtergehäuse stellt sicher, dass die verbrauchte Filterpatrone problemlos entfernt werden kann, ohne dass die Gefahr einer Kontamination der Umgebung bestünde. Beim Einsetzen einer neuen Filterpatrone ist lediglich darauf zu achten, dass der Folienring mit dem zusammengefalteten Folienschlauch am Anschlussring des Filtergehäuses fixiert wird, bevor der Filterhaltering auf den Anschlussring aufgesetzt wird. Dadurch, dass der Folienring axial verschieblich auf dem Filterkörper sitzt, ist dies leicht möglich.

Der Filterkörper ist vorzugsweise als Hohlzylinder ausgebildet, könnte aber auch quadratischen oder rechteckigen Querschnitt haben.

Der Filterhaltering hat vorzugsweise eine kreisförmige Oberseite und eine zylindrische Wandung, ist also in der Art eines Deckels mit U-förmigem Querschnitt ausgebildet. Dabei ist der Durchmesser des Filterhalterings größer als der Durchmesser des Anschlussrings. Der Folienring hat dagegen zweckmäßig einen kleineren Durchmesser als der Filterhaltering. Die Durchmesser sind dabei so aufeinander abgestimmt, dass der Folienring mit dem zusammengefalteten Filterschlauch in einem Ringspalt zwischen dem Filterhaltering und dem Anschlussring Platz hat, sodass der Folienring koaxial zwischen Filterhaltering und Anschlussring sitzt, wenn der Filterring auf den Anschlussring aufgesetzt ist. Die zylindrische Wandung des Filterhalterings überlappt den Anschlussring zumindest teilweise. Da der Folienschlauch eng zusammengefaltet in dem Folienring sitzt und Filterhaltering, Folienring und Anschlussring koaxial zueinander angeordnet sind, benötigt der Folienring mitsamt Folienschlauch keine zusätzliche axiale Länge der Filterpatrone.

Die Befestigung des Folienschlauchs erfolgt bevorzugt durch Klemmringe. An der Innenseite des Filterhalterings sitzt ein erster Klemmring, der den oberen Rand des Filterschlauchs hält. An der Innenseite des Folienrings sitzt ein zweiter Klemmring, der den unteren Rand des Folienschlauchs hält. Der lose und in axialer Richtung beweglich auf dem zylindrischen Filterkörper sitzende Folienring ist also nur durch den Folienring mit dem Filterhaltering - und damit mit der Filterpatrone - fest verbunden. Erst beim Einbau der Filterpatrone wird der Folienring zusätzlich an dem Anschlussring des Filtergehäuses fixiert, und zwar bevor der Filterhaltering mit dem Anschlussring des Filtergehäuses verbunden wird. Wird die Filterpatrone später ausgewechselt, zieht sich der zusammengefaltete Folienschlauch automatisch in die Länge, da der untere Rand des Folienschlauchs zunächst weiterhin an dem Anschlussring des Filtergehäuses fixiert bleibt. Die Verbindung zwischen Filterring und Anschlussring wird erst gelöst, wenn der auseinandergezogene Folienschlauch abgeklemmt und auseinandergeschnitten ist.

Erfindungsgemäß lagern sich die angesaugten Schadstoffpartikel an der Außenseite des Filterkörpers an und dient der auseinanderziehbare Folienschlauch dazu, dass beim Auswechseln der Filterpatrone abfallende Schadstoffpartikel nicht freigesetzt werden, sondern in der durch den über den Filterkörper gezogenen "Tüte" bleiben. Der Filterkörper ist deshalb vorzugsweise als Sättigungsfilter ausgebildet. Optional kann der Filterkörper selbstreinigend sein, entweder durch Druckluft oder mechanisch oder durch Rückströmung.

Der Folienschlauch besteht zweckmäßig aus einer dünnen Kunststofffolie, die einerseits ausreichend reißfest ist, andererseits aber auch so dünn, dass sie in zusammengefaltetem Zustand problemlos in den Folienring bzw. den zwischen dem zylindrischen Filterkörper und dem Folienring zur Verfügung stehenden Platz passt.

Ein Ausführungsbeispiel der Erfindung wird nachstehend anhand der beigefügten Zeichnungen näher erläutert. Es zeigen:
- Figur 1: ein Filtergerät mit Filterpatrone, schematisch;
- Figur 2: ein Aufnahmeblech mit Anschlussring für die Verbindung mit der Filterpatrone, perspektivisch;
- Figur 3: die Konstruktion von Fig. 2;
- Figur 4: die Filterpatrone von Fig. 3 in eingebautem Zustand, in einem Vertikalschnitt;
- Figur 5a, 5b: Einbau und Ausbau der Filterpatrone.

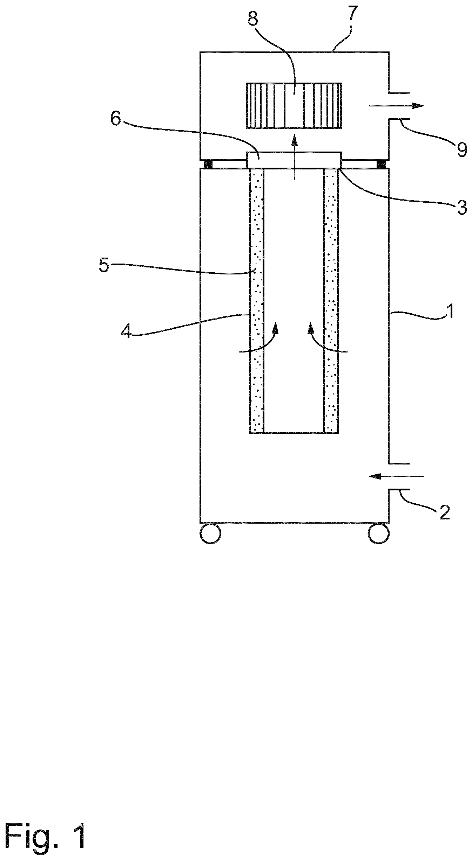

Das in Fig. 1 zu sehende Filtergerät hat ein rechteckiges Filtergehäuse 1 mit einem Lufteinlass 2, an den ein Schlauch zum Absaugen kontaminierter Luft angeschlossen werden kann. An seiner Oberseite hat das Filtergehäuse 1 eine Auslassöffnung 3, in der eine auswechselbare Filterpatrone 4 sitzt. Die Filterpatrone 4 hat einen hohlzylindrischen Filterkörper 5, dessen unteres Ende geschlossen ist. Am oberen Ende des Filterkörpers 5 sitzt ein Filterhaltering 6. An das Filtergehäuse 1 schließt sich ein Motorgehäuse 7 an, in dem ein Sauggebläse 8 angeordnet ist. In der Seitenwand des Motorgehäuses 7 ist ein Luftauslass 9 vorgesehen.

Die zu reinigende Luft gelangt durch den Lufteinlass 2 zunächst in das Innere des Filtergehäuses 1 und wird von dort durch das Sauggebläse 8 durch den Filterkörper 5 gesaugt. Dabei adsorbiert der Filterkörper 5 die Schadstoffpartikel. Die so gefilterte Luft strömt durch die Auslassöffnung 3 des Filtergehäuses 1 in das darüber liegende Motorgehäuse 7 und wird von dem Sauggebläse 8 durch den Luftauslass 9 in die Umgebung ausgeblasen.

Der Filterkörper 5 ist als Sättigungsfilter ausgebildet. Wenn der Filterkörper 5 die Beladungsgrenze überschritten hat, muss die Filterpatrone 4 gegen eine neue ausgetauscht werden. Hierzu muss das Motorgehäuse 7 geöffnet werden, um die Filterpatrone 4 nach oben herauszuziehen.

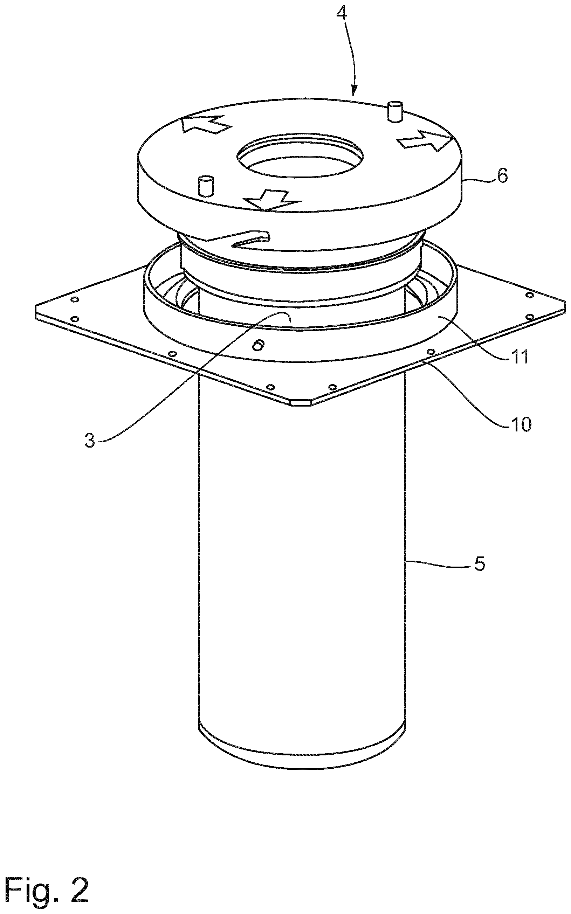

In Fig. 2 ist nur der obere Teil der Filterpatrone 4 mit dem Filterhaltering 6 zu sehen. An der Oberseite des Filtergehäuses 1 (vgl. Fig. 1) sitzt ein Aufnahmeblech 10, in dem die Auslassöffnung 3 ausgebildet ist. In der Auslassöffnung 3 sitzt ein Anschlussring 11. Der Filterhaltering 6 ist mittels Bajonettverschluss mit dem Anschlussring 11 luftdicht, gleichwohl lösbar, verbindbar. Der Filterkörper 5 befindet sich dann vollständig im Innern des Filtergehäuses 1.

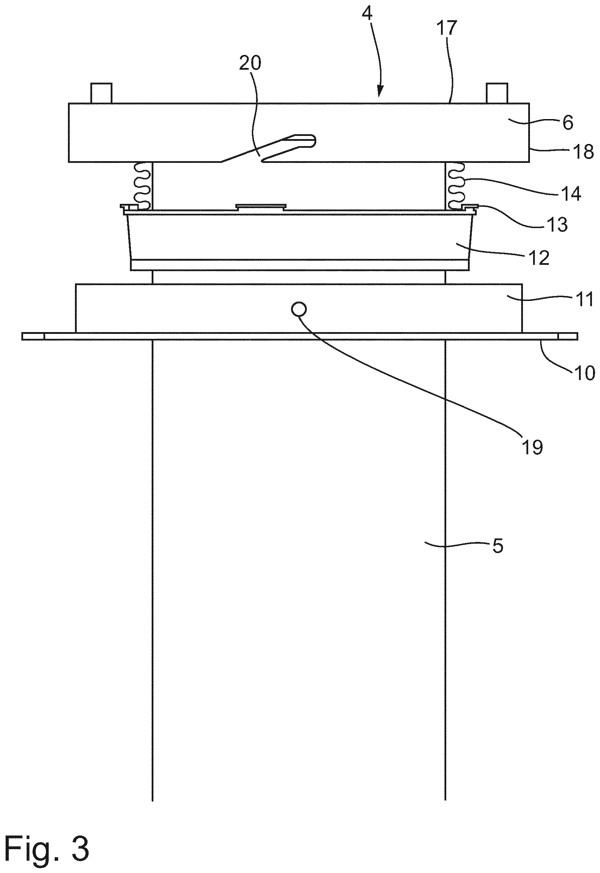

Fig. 3 zeigt alle Einzelheiten der erfindungsgemäß ausgebildeten Filterpatrone 4. Auf dem hohlzylindrischen Filterkörper 5 ist ein Folienring 12 koaxial angeordnet. Der Folienring 12 hat einen deutlich größeren Durchmesse als der Filterkörper 5, sodass der Folienring 12 in axialer Richtung gegenüber dem Filterkörper 5 und dem Filterhaltering 6 verschieblich ist. Der Folienring 12 hat die Form eines kurzen zylindrischen Rohrs und besteht aus hartem, aber begrenzt biegbaren Kunststoff. Am oberen Rand sind radial nach außen abstehende Rastnasen 13 angeformt. In dem Folienring 12 sitzt ein zusammengefalteter und in axialer Richtung auseinanderziehbarer Folienschlauch 14, dessen unteres Ende mit dem Folienring 12 verbunden ist und dessen oberes Ende an der Innenseite des Filterhalterings 6 befestigt ist. Der Innendurchmesser des Filterhalterings 6 ist größer als der Außendurchmesser des Folienrings 12, sodass der Folienring 12 zusammen mit dem Folienschlauch 14 in den ringförmigen Zwischenraum zwischen Filterkörper 5 und Filterhaltering 6 einschiebbar ist. Auch der Anschlussring 11 (vgl. Fig. 2) hat größeren Durchmesser als der Folienring 12, sodass der Folienring 12 nach unten in den Anschlussring 11 gedrückt werden kann.

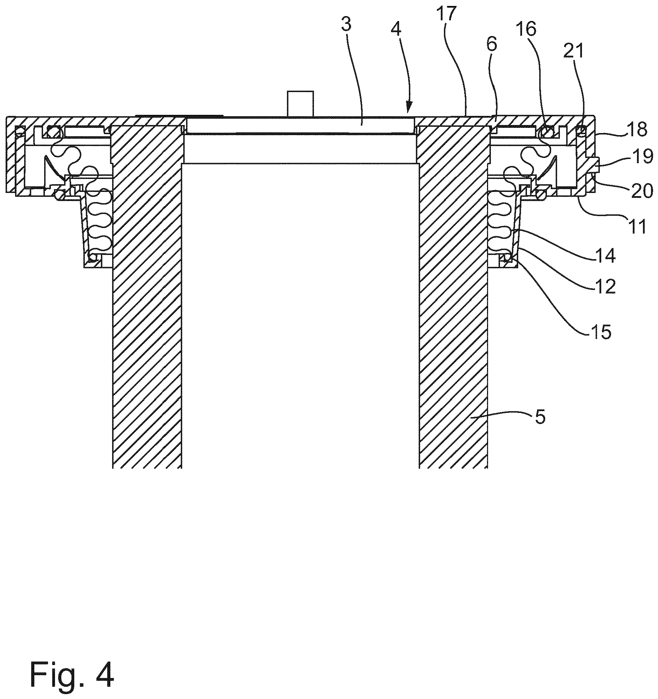

In Fig. 4 ist die Filterpatrone 4 in eingebautem Zustand zu sehen. Der Filterhaltering 6 ist mittels des Bajonettverschlusses auf dem Anschlussring 11 montiert. Die Rastnasen 13 des Folienrings 12 greifen in korrespondierende Ausnehmungen des Anschlussrings 11 ein, sodass der Folienring 12 an dem Anschlussring 11 fixiert ist. Ein erster Klemmring 15 verbindet den unteren Rand des Folienschlauchs 14 mit dem Folienring 12. Der obere Rand des Folienschlauchs 14 ist mit einem zweiten Klemmring 16 mit dem Filterhaltering 6 verbunden. Der Filterhaltering 6 hat eine ebene Oberseite 17 in Form eines Kreisrings, welcher die Auslassöffnung 3 des Filtergehäuses 1 (vgl. Fig. 1, Fig. 2) im Wesentlichen frei lässt. Der Querschnitt des Filterhalterings 6 entspricht einem umgekehrten großen U und hat eine Wandung 18 in Form eines kurzen zylindrischen Rohrstücks.

Der Anschlussring 11 hat radial nach außen weisende Stifte 19, welche in kurze Längsschlitze 20 in der Wandung 18 des Filterhalterings eingreifen und so den Bajonettverschluss der Filterpatrone 4 bilden (vgl. auch Fig. 3). Ein Dichtring 21 dichtet den Filterhaltering 6 gegenüber dem Anschlussring 11 luftdicht ab.

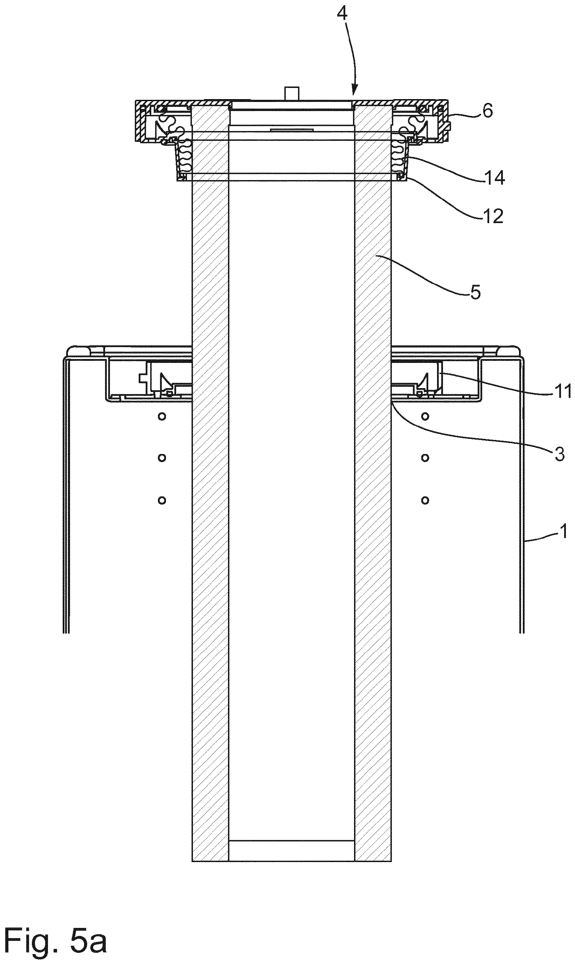

Fig. 5a illustriert den Einbau der Filterpatrone 4. Hierzu wird der langgestreckte Filterkörper 5 durch die Auslassöffnung 3 in das Innere des Filtergehäuses 1 eingeführt. Anschließend wird der Filterhaltering 6 auf den Anschlussring 11 des Filtergehäuses 1 aufgesetzt und durch eine kleine Drehbewegung auf diesen befestigt. Dabei drückt sich der Folienring 12 mit dem Folienschlauch 14 in den Anschlussring 11 und wird dort automatisch fixiert. Das Filtergerät ist nun betriebsbereit.

Um die Filterpatrone 4 auszutauschen, wird zunächst der Filterhaltering 6 durch Öffnen des Bajonettverschlusses von dem Anschlussring 11 gelöst, sodass der Filterkörper 5 nach oben durch die Auslassöffnung 3 aus dem Filtergehäuse 11 herausgezogen werden kann. Dabei bleibt der Folienring 12 an dem Anschlussring 11 fixiert, was zu einer automatischen Entfaltung des Folienschlauchs 14 führt.

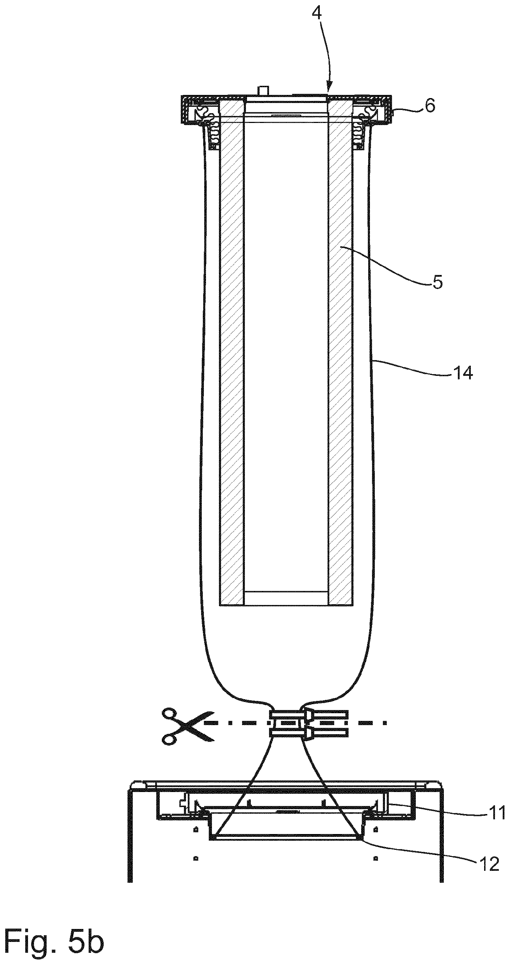

In Fig. 5b ist der Filterkörper 5 vollständig herausgezogen. Der Folienschlauch 14 ist ganz auseinandergezogen. Der Folienschlauch 14 umhüllt den Filterkörper 5 mit den angelagerten Schadstoffpartikeln vollständig. Der Folienschlauch 14 kann nun in ausreichendem Abstand vom unteren Ende des Filterkörpers 5 abgebunden und sodann abgetrennt werden. Das offene Ende des Folienschlauchs 14 wird dann partikeldicht verschlossen, beispielsweise durch Verkleben oder Verschweißen. Die derart partikeldicht eingehüllte Filterpatrone 4 kann nun abtransportiert und entsorgt werden.

Der im Anschlussring 11 verbliebene Folienring 12 mit dem abgeschnittenen Rest des Folienschlauchs 14 kann einfach von Hand aus dem Anschlussring 11 herausgenommen werden, indem die Rastverbindung gelöst wird.

### Bezugszeichen

- 1: Filtergehäuse
- 2: Lufteinlass
- 3: Auslassöffnung
- 4: Filterpatrone
- 5: Filterkörper (von 4)
- 6: Filterhaltering (von 4)
- 7: Motorgehäuse
- 8: Sauggebläse
- 9: Luftauslass (von 7)
- 10: Aufnahmeblech (von 1)
- 11: Anschlussring (in 3)
- 12: Folienring
- 13: Rastnase (von 12)
- 14: Folienschlauch
- 15: Klemmring
- 16: Klemmring
- 17: Oberseite (von 6)
- 18: Wandung (von 6)
- 19: Stift (an 11)
- 20: Längsschlitz (in 18)
- 21: Dichtring (an 6)

## Patentansprüche

1. Filtergerät zum Entfernen von Schadstoffpartikeln aus der Luft, umfassend
ein Filtergehäuse (1) mit einem Lufteinlass (2) und einer Auslassöffnung (3), in der ein Anschlussring (11) sitzt,
eine auswechselbare Filterpatrone (4) mit einem hohlen Filterkörper (5), der an seinem einen Ende geschlossen ist und an seinem anderen Ende einen Filterhaltering (6) trägt, welcher auf den Anschlussring (11) des Filtergehäuses (1) aufsetzbar ist, sodass der Filterkörper (5) im Innern des Filtergehäuses sitzt,
ein Sauggebläse (8), das kontaminierte Luft durch den Filterkörper (5) saugt und die gefilterte Luft in die Umgebung ausbläst,
**dadurch gekennzeichnet, dass**
auf dem Filterkörper (5) ein Folienring (12) koaxial und in axialer Richtung verschieblich angeordnet ist,
in dem Folienring (12) ein zusammengefalteter und in axialer Richtung auseinanderziehbarer Folienschlauch (14) sitzt,
das eine Ende des Folienschlauchs (14) an dem Folienring (12) und das andere Ende an dem Filterhaltering (6) befestigt ist,
der Folienring (12) an dem Anschlussring (11) des Filtergehäuses (1) derart fixierbar ist, dass sich der Folienschlauch (14) entfaltet, wenn der Filterkörper (5) aus dem Filtergehäuse herausgezogen wird,
der Folienschlauch (14) länger ist als der Filterkörper (5), sodass der ganz auseinandergezogene Folienschlauch den Filterkörper vollständig umhüllt.

2. Filtergerät nach Anspruch 1, **dadurch gekennzeichnet, dass**
der Filterkörper (5) als Hohlzylinder ausgebildet ist,
der Filterhaltering (6) eine kreisringförmige Oberseite (17) und eine zylindrische Wandung (18) hat,
der Durchmesser des Filterhalterings (6) größer ist als der Durchmesser des Anschlussrings (11),
der Durchmesser des Folienrings (12) kleiner ist als der Durchmesser des Filterhalterings (6),
der zusammengefaltete Folienschlauch (14) zwischen dem Folienring (12) und dem Filterkörper sitzt, wenn der Filterhaltering (6) auf den Anschlussring aufgesetzt ist.

3. Filtergerät nach einem der vorhergehenden Ansprüche, **dadurch gekennzeichnet, dass** der obere Rand des Folienschlauchs (14) durch einen Klemmring (15) mit dem Filterhaltering (6) verbunden ist.

4. Filtergerät nach einem der vorhergehenden Ansprüche, **dadurch gekennzeichnet, dass** der untere Rand des Folienschlauchs (14) durch einen Klemmring (16) mit dem Folienring (12) verbunden ist.

5. Filtergerät nach einem der vorhergehenden Ansprüche, **dadurch gekennzeichnet, dass** der Filterhaltering (6) mittels Bajonettverschluss mit dem Anschlussring (11) verbindbar ist.

6. Filtergerät nach einem der vorhergehenden Ansprüche, **dadurch gekennzeichnet, dass** der Folienring (12) durch eine Rastverbindung an dem Anschlussring (11) des Filtergehäuses (1) fixierbar ist.

7. Filtergerät nach einem der vorhergehenden Ansprüche, **dadurch gekennzeichnet, dass** der Filterkörper als Sättigungsfilter ausgebildet ist.

8. Filtergerät nach einem der vorhergehenden Ansprüche, **dadurch gekennzeichnet, dass** der Folienschlauch (14) aus einer dünnen Kunststoff-Folie besteht.

## Claims

1. Filter device for removing pollutant particles from the air, comprising
a filter housing (1) with an air inlet (2) and an outlet opening (3) in which a connection ring (11) is arranged,
a replaceable filter cartridge (4) with a hollow filter body (5), which is closed at its one end and at its other end carries a filter holding ring (6) which can be placed on the connection ring (11) of the filter housing (1) so that the filter body (5) is arranged inside the filter housing,
a suction blower (8), which sucks contaminated air through the filter body (5) and blows the filtered air into the environment,
**characterized in that**
on the filter body (5), a film ring (12) is arranged coaxially and displaceably in the axial direction,
in the film ring (12), a folded film tube (14) is arranged that can be pulled apart in the axial direction,
the one end of the film tube (14) is attached to the film ring (12) and the other end is attached to the filter holding ring (6),
the film ring (12) can be fixed to the connection ring (11) of the filter housing (1) in such a way that the film tube (14) unfolds when the filter body (5) is pulled out of the filter housing,
the film tube (14) is longer than the filter body (5), so that the fully expanded film tube completely envelops the filter body.

2. Filter device according to claim 1, **characterized in that**
the filter body (5) is designed as a hollow cylinder,
the filter holding ring (6) has an annular top (17) and a cylindrical wall (18),
the diameter of the filter holding ring (6) is greater than the diameter of the connection ring (11),
the diameter of the film ring (12) is smaller than the diameter of the filter holding ring (6),
the folded film tube (14) is arranged between the film ring (12) and the filter body when the filter holding ring (6) is fitted on the connection ring.

3. Filter device according to any one of the preceding claims, **characterized in that** the upper edge of the film tube (14) is connected to the filter holding ring (6) by means of a clamping ring (15).

4. Filter device according to any one of the preceding claims, **characterized in that** the lower edge of the film tube (14) is connected to the film ring (12) by means of a clamping ring (16).

5. Filter device according to any one of the preceding claims, **characterized in that** the filter holding ring (6) can be connected to the connection ring (11) by means of a bayonet lock.

6. Filter device according to any one of the preceding claims, **characterized in that** the film ring (12) can be fixed to the connection ring (11) of the filter housing (1) by means of a latching connection.

7. Filter device according to any one of the preceding claims, **characterized in that** the filter body is designed as a saturation filter.

8. Filter device according to any one of the preceding claims, **characterized in that** the film tube (14) consists of a thin plastic film.

## Revendications

1. Appareil filtrant destiné à éliminer des particules de substances nocives de l'air, comprenant :
un boîtier de filtre (1) avec une entrée d'air (2) et un orifice de sortie (3) au sein duquel se trouve une bague de raccordement (11),
une cartouche filtrante (4) remplaçable avec un corps filtrant (5) creux fermé au niveau d'une extrémité et portant au niveau de l'autre extrémité une bague de retenue de filtre (6) pouvant être placée sur la bague de raccordement (11) du boîtier de filtre (1) de sorte que le corps filtrant (5) se trouve à l'intérieur du boîtier de filtre,
une soufflerie d'aspiration (8) qui aspire l'air contaminé à travers le corps filtrant (5) et souffle l'air filtré dans l'environnement,
**caractérisé en ce que**
une bague flexible (12) est agencée sur le corps filtrant (5) de manière coaxiale et de manière à pouvoir se déplacer dans la direction axiale,
un tube flexible (14) replié et pouvant être déployé dans la direction axiale se trouve dans la bague flexible (12),
une extrémité du tube flexible (14) est fixée à la bague flexible (12) et l'autre extrémité est fixée à la bague de retenue de filtre (6),
la bague flexible (12) peut être fixée à la bague de raccordement (11) du boîtier de filtre (1) de telle manière que le tube flexible (14) se déplie lorsque le corps filtrant (5) est sorti du boîtier de filtre,
le tube flexible (14) est plus long que le corps filtrant (5), de sorte que le tube flexible complètement déployé enveloppe complètement le corps filtrant.

2. Appareil filtrant selon la revendication 1, **caractérisé en ce que**
le corps filtrant (5) est réalisé sous la forme d'un cylindre creux,
la bague de retenue de filtre (6) présente une face supérieure annulaire (17) et une paroi cylindrique (18),
le diamètre de la bague de retenue de filtre (6) est supérieur au diamètre de la bague de raccordement (11),
le diamètre de la bague flexible (12) est inférieur au diamètre de la bague de retenue de filtre (6),
le tube flexible (14) replié se trouve entre la bague flexible (12) et le corps filtrant lorsque la bague de retenue de filtre (6) est placée sur la bague de raccordement.

3. Appareil filtrant selon l'une quelconque des revendications précédentes, **caractérisé en ce que** le bord supérieur du tube flexible (14) est relié à la bague de retenue de filtre (6) par une bague de serrage (15).

4. Appareil filtrant selon l'une quelconque des revendications précédentes, **caractérisé en ce que** le bord inférieur du tube flexible (14) est relié à la bague flexible (12) par une bague de serrage (16).

5. Appareil filtrant selon l'une quelconque des revendications précédentes, **caractérisé en ce que** la bague de retenue de filtre (6) peut être reliée à la bague de raccordement (11) au moyen d'une fermeture à baïonnette.

6. Appareil filtrant selon l'une quelconque des revendications précédentes, **caractérisé en ce que** la bague flexible (12) peut être fixée à la bague de raccordement (11) du boîtier de filtre (1) grâce à une liaison par encliquetage.

7. Appareil filtrant selon l'une quelconque des revendications précédentes, **caractérisé en ce que** le corps filtrant est réalisé sous la forme d'un filtre à saturation.

8. Appareil filtrant selon l'une quelconque des revendications précédentes, **caractérisé en ce que** le tube flexible (14) est constitué d'une feuille mince en matière plastique.
